# EUROPEAN PATENT APPLICATION

(11) **EP 4 726 966 A1**
(43) Date of publication of application: **15.04.2026**
(21) Application number: 25195302.2
(22) Date of filing: 12.08.2025
(51) Int. Cl.: H02J 50/10, G05F 1/613, H02J 7/04

(54) **INTERNAL LOAD WITH INTEGRATED CURRENT SHUNT CIRCUITRY**

(30) Priority: 29.08.2024 US 202418819812
(71) Applicant: Avago Technologies International Sales Pte. Limited, Singapore 768923 (SG)
(72) Inventor: Desrosiers, Ryan, Fort Collins, CO 80528 (US); Greenwood, Stephen Francis, Fort Collins, CO 80524 (US)
(74) Representative: Grünecker Patent- und Rechtsanwälte PartG mbB

(57) **Abstract**

A power transceiver includes a power converter, a current regulator and a voltage regulator. The power converter converts electric power into an unregulated current in response to wirelessly receiving electric power. The current regulator modifies a system current in response to adjusting the unregulated current. The voltage regulator maintains the regulated voltage at a voltage in response to converting the system current into a regulated voltage.

## Description

### BACKGROUND

Communication devices from different manufacturers can receive a wireless transfer of power. With some power supply systems, the charging of a communication device can be initiated when the communication device is placed onto a charging tray.

### BRIEF DESCRIPTION OF DRAWINGS

The accompanying drawings, which are incorporated in and form a part of this specification, illustrate examples of the disclosure and, together with the description, explain principles of the examples.
FIG. 1 illustrates an example power transfer system, in accordance with one or more embodiments of the disclosure.
FIG. 2A illustrates an example power transceiver, in accordance with one or more embodiments of the disclosure.
FIG. 2B illustrates an example ballast mode, in accordance with one or more embodiments of the disclosure.
FIG. 2C illustrates an example constant-current mode, in accordance with one or more embodiments of the disclosure.
FIG. 2D is a block diagram illustrating an example current regulator, in accordance with one or more embodiments of the disclosure.
FIG. 3 is a schematic structural diagram illustrating an example of an internal load integrated with current shunt circuitry, in accordance with one or more embodiments of the disclosure.
FIG. 4 is a schematic structural diagram illustrating an example of an internal load integrated with current shunt circuitry, in accordance with one or more embodiments of the disclosure.
FIG. 5 is a schematic structural diagram illustrating an example of an internal load integrated with current shunt circuitry, in accordance with one or more embodiments of the disclosure.
FIG. 6 is a flowchart that illustrates an example conditioning of electric power, in accordance with one or more embodiments of the disclosure.

In the drawings, like reference symbols and numerals indicate the same or similar components. Like elements in the various figures are denoted by like reference symbols and numerals for consistency. Unless otherwise indicated, like elements and method steps are referred to with like reference numerals.

### DETAILED DESCRIPTION OF THE INVENTION

The following describes technical solutions in this specification with reference to the accompanying drawings. Exemplary embodiments are described in detail with reference to the accompanying drawings.

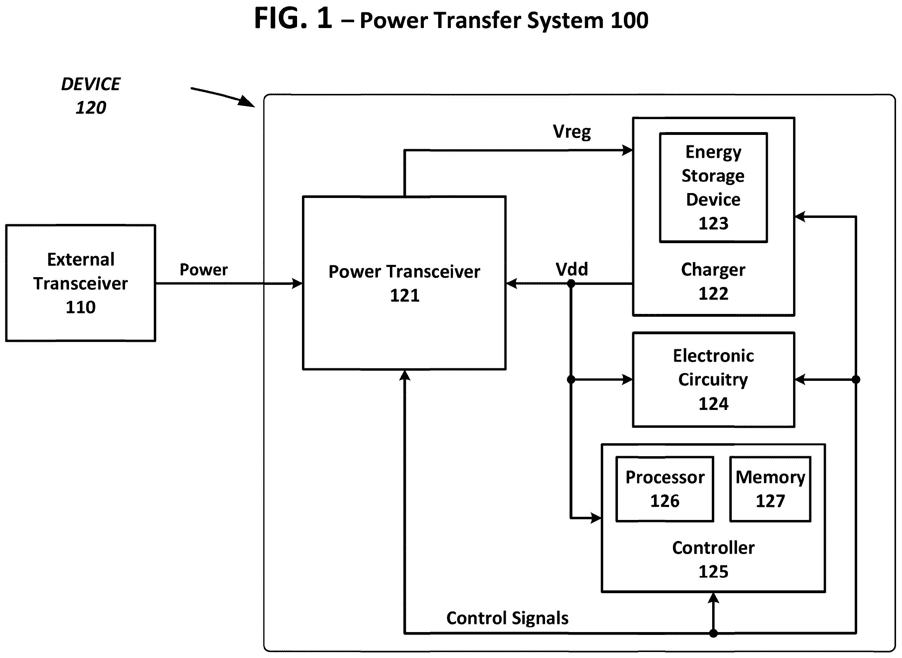

FIG. 1 illustrates an example power transfer system 100. The power transfer system 100 may include external transceiver 110 and device 120. Device 120 is removable from external transceiver 110. In some examples, device 120 may wirelessly receive power from external transceiver 110. Device 120 may also wirelessly receive information from external transceiver 110. In other examples, device 120 may wirelessly output power to external transceiver 110. Device 120 may also wirelessly transmit information to external transceiver 110.

Device 120 may be configured as any type of electrically powered device. For example, device 120 may be configured as a mobile communication device including but not limited to a mobile phone, a smart phone, cell phone, or tablet. Device 120 may be configured as a wearable device, a smartwatch, a fitness tracker or a personal digital assistant (PDA). In other examples, device 120 may be configured as a media device (e.g., media playing and/or recording device). For instance, device 120 may include portable music player, an audio device such as an audio recorder, an audio converter, an audio player, or a speaker (e.g., a Bluetooth-enabled speaker). In other instances, device 120 may include a video device such as a video display, a video recorder, a camera, or other video device. In another example, device 120 may be configured as, a driver assistance module in a vehicle, an emergency transponder, a pager, a watch, a satellite television receiver, a stereo receiver, a computer system, music player, laptop or tablet computer, home appliance, or virtually any other device. In another example, device 120 may be configured as a computer (e.g., a laptop computer). In other examples, device 120 may be configured as a computing/entertainment device for a vehicle. Device 120 may include power transceiver 121, charger 122, electronic circuitry 124 and controller 125.

Power transceiver 121 may condition electric power in response to receiving the electric power from external transceiver 110. Electric power from external transceiver 110 may be AC (alternating current) power or DC (Direct current) power. A regulated voltage (Vreg) is a DC voltage. In response to conditioning electric power, power transceiver 121 may convert electric power into voltage Vreg and output voltage Vreg to charger 122. In response to power transceiver 121 conditioning electric power, power transceiver 121 may convert electric power into voltage Vreg for downstream usage in charger 122, as will be explained in detail. Power transceiver 121 may wirelessly output information to external transceiver 110. An integrated circuit chip may include power transceiver 121 in some examples.

Charger 122, which is downstream from power transceiver 121, is circuitry that may perform DC-to-DC conversion on voltage Vreg. In response to performing the DC-to-DC conversion, charger 122 may transform voltage Vreg into an adjusted DC voltage. The adjusted DC voltage is a voltage having a voltage level that differs from the voltage level for voltage Vreg. Charger 122 may perform charging of energy storage device 123. In response to charging energy storage device 123, charger 122 may store the adjusted DC voltage in energy storage device 123. Energy storage device 123 may include a battery and/or a battery pack.

Charger 122 may also manage electrical energy that is stored in energy storage device 123. In response to managing the electrical energy that is stored in energy storage device 123, charger 122 may convert the electrical energy into a supply voltage Vdd. The supply voltage Vdd is a DC voltage. Charger 122 may output the supply voltage Vdd to electronic circuitry 124, power transceiver 121 and controller 125. Power transceiver 121, electronic circuitry 124 and controller 125 may receive the supply voltage Vdd from charger 122. In addition, charger 122 may output the supply voltage Vdd to electronic circuitry 124, power transceiver 121 and controller 125. The supply voltage Vdd may power up controller 125, electronic circuitry 124, charger 122 and power transceiver 121.

Controller 125 is electronic hardware implemented as any suitable processing circuitry. The processing circuitry may include, but not limited to at least one of a microcontroller, a microprocessor, a single processor, and a multiprocessor. Controller 125 may include at least one of an embedded controller (EC), a central processing unit (CPU), an accelerated processing unit (APU), an application specific integrated circuit (ASIC), field programmable gate arrays (FPGA), control logic, a state machine, programmable processor, or the like. Controller 125 may be implemented as electronic hardware that may include digital circuits, analog circuits or a combination of both digital and analog circuits. Analog circuits may include analog components that are suitable to process analog gate signals. Digital circuits may include switches and gates that are suitable to process digital gate signals. As will be explained in detail, controller 125 may control the functions and circuitry of power transceiver 121.

Memory 127 may be a non-transitory machine-readable storage medium. The non-transitory machine-readable storage medium may be a non-transitory processor readable or computer readable storage medium. The non-transitory machine-readable storage medium may comprise read-only memory ("ROM"), random access memory ("RAM"), other non-transitory computer-readable media and/or a combination thereof. Memory 127 may be any electronic, magnetic, optical, or other physical storage device. Memory 127 may store executable instructions for device 120. In some examples, the executable instructions may be in the form of software and/or firmware. The software for device 120 may include program code. The program code may include program instructions that are readable and executable by controller 125, also referred to as machine-readable instructions. Memory 127 may also store data, filters, rules and/or a combination thereof.

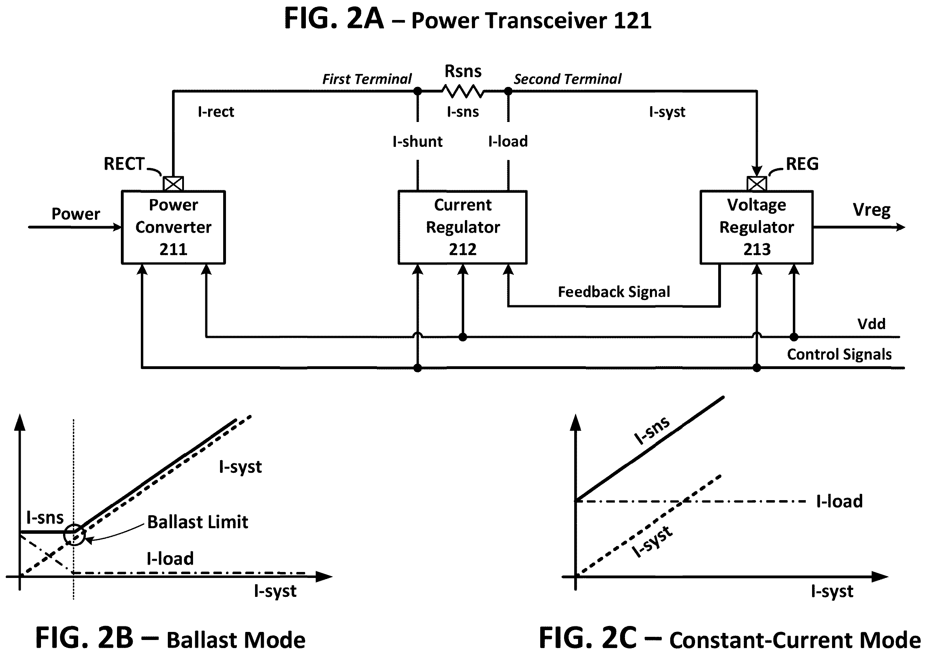

FIG. 2A illustrates an example power transceiver 121. Power transceiver 121 is circuitry that may condition and transform electric power into voltage Vreg. Power transceiver 121 may include a power converter 211, current regulator 212 and voltage regulator 213.

Power converter 211 is circuitry that may convert the electric power into unregulated current (I-rect). Unregulated current (I-rect) is a DC current. Power converter 211 may wirelessly receive the electric power from external transceiver 110. In response to wirelessly receiving the electric power, power converter 211 may rectify the electric power so as to convert the electric power into unregulated current (I-rect). Power converter 211 may, from a power converter output (RECT), output unregulated current (I-rect) through resistor Rsns.

As illustrated in FIG. 2A, a resistor Rsns is between the power converter output (RECT) and a voltage regulator input (REG). Current regulator 212 may manage current flowing along a pathway in power transceiver 121. The pathway in power transceiver 121 may include a flow path from power converter 211 to the voltage regulator 213. In particular, the flow path from power converter 211 to the voltage regulator 213 may include a flow path from the power converter output (RECT) to a first terminal of resistor Rsns and another flow path from a second terminal of resistor Rsns to the voltage regulator input (REG).

By way of illustration in FIGS. 2A-2D, unregulated current (I-rect) may include shunt current (I-shunt) and sensed current (I-sns). Unregulated current (I-rect) may flow from the power converter output (RECT) to the first terminal of resistor Rsns. Sensed current (I-sns) may flow through resistor Rsns. In some embodiments, shunt current (I-shunt) may flow in a flow path between current regulator 212 and the first terminal of resistor Rsns. Those skilled in the art will appreciate that the amount of the shunt current (I-shunt) may be the difference between unregulated current (I-rect) and sensed current (I-sns). In various embodiments, resistor Rsns is of an ohmic value that ensures a significant amount of unregulated current (I-rect) may flow from the power converter output (RECT) to the voltage regulator input (REG) without degrading the performance characteristics of power transceiver 121.

Load current (I-load) may flow in a path from the internal load 215 through the resistor Rsns. System current (I-syst) may flow from the second terminal of resistor Rsns to the voltage regulator input (REG). Those skilled in the art will appreciate that the amount of sensed current (I-sns) is the sum of system current (I-syst) and load current (I-load). As will be explained in detail, internal load 215 may perform as a current sink in power transceiver 121.

Internal load 215 may regulate the amount of sensed current (I-sns) that flows from the second terminal of resistor Rsns. For example, assuming a small amount of shunt current (I-shunt), sensed current (I-sns) is approximately equal to the current drawn from the power converter (RECT). In response to controlling the amount of sensed current (I-sns) that flows from the power converter (RECT), internal load 215 may control the amount of load current (I-load) that flows in the flow path between second terminal of resistor Rsns and internal load 215.

To control the amount of load current (I-load), internal load 215 may alternatively operate in a plurality of user-selectable power reception modes. One of the power reception modes is a ballast mode as illustrated in the example of FIG. 2B. Another of the power reception modes is a constant-current mode as illustrated in the example of FIG. 2C. Current regulator 212 may alternatively adjust the sensed current (I-sns) based on system current (I-syst), as illustrated in the example power reception modes of FIGS. 2B and 2C. Sensed current (I-sns) is depicted in FIGS. 2B and 2C as a solid line. In the examples of FIGS. 2B and 2C, system current (I-syst) is depicted as a dashed line. The dot-dashed line in FIGS. 2B and 2C depicts load current (I-load).

As one of the power reception modes, FIG. 2B illustrates the ballast mode. In the ballast mode, internal load 215 may safeguard against sensed current (I-sns) falling below a ballast limit, regardless of any changes in system current (I-syst). The ballast limit is a predetermined amount of current. Current regulator 212 may measure sensed current (I-sns) during the ballast mode. For example, internal load 215 may decrease the flow load current (I-load) through internal load 215 concurrently with an increase of system current (I-syst) in response to sensed current (I-sns) is below the ballast limit, as illustrated by the example of FIG. 2B. Internal load 215 may reduce an amount of load current (I-load) drawn through internal load 215 in response to decreasing the flow load current (I-load) through internal load 215. As additionally illustrated by the example of FIG. 2B in response to sensed current (I-sns) being below the ballast limit, internal load 215 may draw an increasing amount of load current (I-load) through internal load 215 concurrently with a decreasing of system current (I-syst). An increase in the flow of load current (I-load) through internal load 215 results in a minimum total sensed current (I-sns) from the power converter as shown in the solid line of FIG. 2B.

In response to sensed current (I-sns) being equal to or above the ballast limit while internal load 215 is in the ballast mode, internal load 215 may inhibit the flow of load current (I-load), as illustrated by the dash-dot line in FIG. 2B. Current regulator 212 may configured to cause linearity of system current (I-syst) with sensed current (I-sns) in response to sensed current (I-sns) being equal to or above the ballast limit.

As system current (I-syst) increases in the ballast mode, the load current (I-load) decreases to keep the sensed current (I-sns) equal to or above the ballast limit, thus presenting a minimum load to power converter 211. In some examples, a closed-loop circuit may guarantee a minimum amount of unregulated current (I-rect) in response to the power reception mode is the ballast mode. The closed-loop circuit may include the current shunt circuitry 214, internal load 215 and the voltage regulator 213. In the closed-loop circuit, the voltage regulator 213 may output a feedback signal to the current shunt circuitry 214.

As another of the power reception modes, FIG. 2C illustrates a constant-current mode. A constant current is a predetermined amount of current. Internal load 215, while in constant-current mode, may function as a current sink that produces the constant current regardless of an amount of sensed current (I-sns) flowing through resistor Rsns. In the example of FIG. 2C, load current (I-load) may be the constant current. In constant-current mode, internal load 215 may continuously cause the predetermined amount of current of load current (I-load) to flow from internal load 215 to second terminal of resistor Rsns. The predetermined amount is programmable. In constant-current mode, the predetermined amount of load current (I-load) is independent of sensed current (I-sns). System current (I-syst) is linear entirely with sensed current (I-sns) during constant-current mode.

Voltage regulator 213 is circuitry that may convert system current (I-syst) into voltage Vreg and output voltage Vreg to charger 122. Voltage regulator 213 may receive system current (I-syst) from the second terminal of resistor Rsns at the voltage regulator input (REG). In response to converting system current (I-syst) into voltage Vreg, the voltage regulator 213 may maintain voltage Vreg at the voltage level despite any fluctuation in system current (I-syst) and despite any fluctuation of any loading condition produced by charger 122. The voltage regulator 213 may output voltage Vreg to charger 122 at the voltage level despite any fluctuation in the voltage level of voltage Vreg.

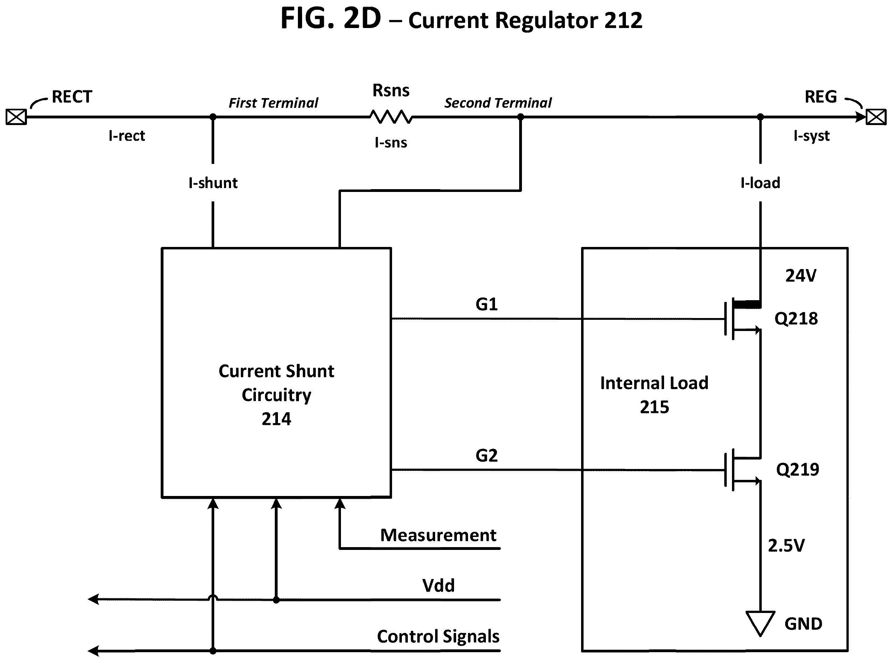

FIG. 2D is a block diagram illustrating an example current regulator 212. Current regulator 212 may include current shunt circuitry 214 and internal load 215. Internal load 215 may include a transistor Q218 and a transistor Q219. Those skilled in the art will appreciate that transistor Q218 may be omitted.

Transistor Q218 and transistor Q219 may each be implemented as an N-type metal-oxide-semiconductor (NMOS) transistor. In some examples, transistor Q218 may be an N-type laterally-diffused metal-oxide semiconductor (LDNMOS) transistor. In other examples, transistor Q218 may be a non-LDNMOS transistor. Any of the first and second transistors Q218, Q219 may be implemented as a Field Effect Transistor (FET), a bipolar transistor, a P-type metal-oxide-semiconductor (PMOS) transistor, or any other transistor device.

Within internal load 215, transistor Q218 may be a cascode. Transistor Q218 may be a high-voltage transistor and transistor Q219 may be a low-voltage transistor. In particular, transistor Q218 may be a protection transistor that provides voltage protection and output impedance boost for transistor Q219. For example, transistor Q218 may be a 24V LDNMOS transistor. Transistor Q219 may be a 2.5V metal-oxide semiconductor (MOS) transistor. Alternative implementations with different voltage tolerance levels for transistor Q218 and transistor Q219 may be envisioned to support different voltage levels for wireless power transfer.

The drain of transistor Q218 is electrically connected to the second terminal of resistor Rsns, the source of transistor Q218 is electrically connected to the drain of transistor Q219, and the source of transistor Q219 is electrically connected to ground.

Current shunt circuitry 214 may receive control signals from controller 125, receive the supply voltage Vdd from charger 122 and a feedback signal from the voltage regulator 213. The first terminal of resistor Rsns is electrically connected to current shunt circuitry 214. Signal lines G1 and G2 connect current shunt circuitry 214 to internal load 215. In particular, signal line G1 is connected to the gate of transistor Q218. Signal line G2 is connected to the gate of transistor Q219.

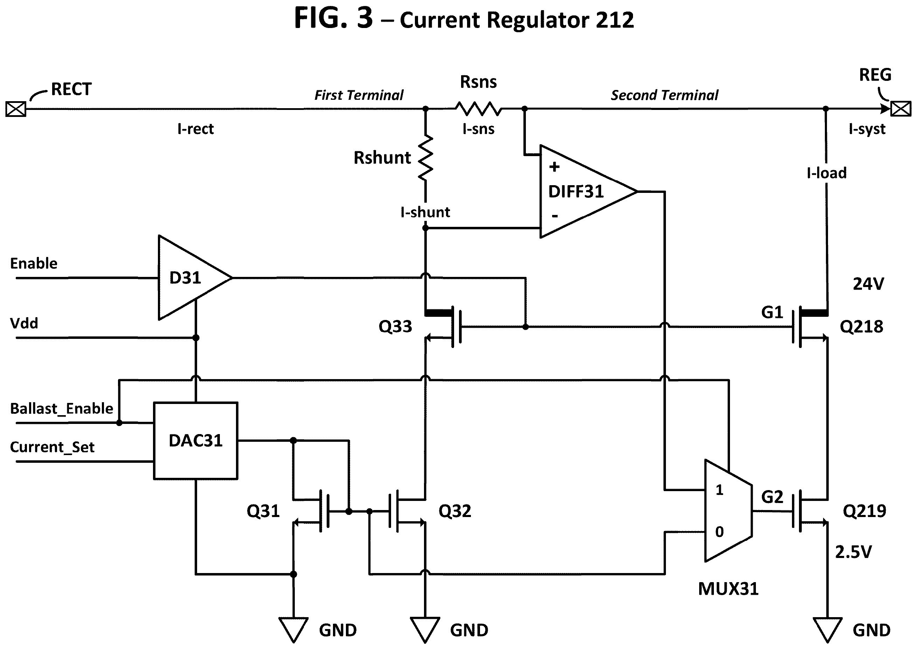

FIG. 3 is a schematic structural diagram of an example internal load 215 integrated with current shunt circuitry 214. Resistor Rshunt, driver D31, converter DAC31, differential amplifier DIFF31 and multiplexer MUX31 are present in current shunt circuitry 214 of FIG. 3. Converter DAC31 is a digital-to-analog converter. Also in FIG. 3, current shunt circuitry 214 may include a current mirror composed of transistor Q31 and transistor Q32 with cascode protection device Q33 that matches the electrical characteristics of transistor Q218.

Transistor Q31 and transistor Q32 may be implemented as N-type metal-oxide-semiconductor (NMOS) transistors. Transistor Q33 may be an N-type laterally-diffused metal-oxide semiconductor (LDNMOS) transistor. Alternatively, any of the transistors Q218 and Q33 may be a transistor other than an LDNMOS transistor. Any of the transistors Q31, Q32, Q33 may be implemented as a Field Effect Transistor (FET), a bipolar transistor, a P-type metal-oxide-semiconductor (PMOS) transistor, or any other transistor device. Those skilled in the art will appreciate that transistors Q218 and Q33 may be omitted.

Current regulator 212 may measure current flowing along a pathway in power transceiver 121 through resistor Rsns. For example, the first terminal of resistor Rsns is electrically connected to the first terminal of resistor Rshunt. The resistance of resistor Rshunt is substantially greater than resistance of resistor Rsns. Specifically, the resistance of resistor Rshunt may be at least 1000 times greater than resistance of resistor Rsns. For example, in response to the resistance of resistor Rsns is 20 mΩ or less, the resistance of resistor Rshunt may be 20Ω or more. The resistance of resistor at least 1000 times greater than resistance of resistor Rsns may ensure that the amount of the shunt current (I-shunt) flowing through the resistor Rshunt is smaller than the amount of sensed current (I-sns) flowing through resistor Rsns.

The second terminal of resistor Rsns is electrically connected to the positive input to differential amplifier DIFF31. The negative input to differential amplifier DIFF31 is electrically connected to the second terminal of resistor Rshunt. Differential amplifier DIFF31 may implement current sensing in the example of FIG. 3.

The output of the converter DAC31 is electrically connected to the gate and drain of transistor Q31. The source of transistor Q31 and the source of transistor Q32 are electrically connected to ground. The gate of transistor Q31 is electrically connected to the "0" input to multiplexer MUX31 and the gate of transistor Q32. The drain of transistor Q32 is electrically connected to the source of transistor Q33. The drain of transistor Q33 is electrically connected to the second terminal of resistor Rshunt and the negative input to differential amplifier DIFF31. The output terminal of differential amplifier DIFF31 is electrically connected to the "1" input to multiplexer MUX31. An external control input Balllast_Enable connects to the selection input of multiplexer MUX31. An external signal Current_Set, which is a control signal from controller 125, controls the output of converter DAC31.

Internal load 215 in FIG. 3 may include transistor Q218 and transistor Q219. Details for internal load 215 in FIG. 3 are explained with reference to FIG. 2D. Signal line G1 electrically connects the gate of transistor Q33 to the gate of transistor Q218. The output of driver D31 is electrically connected to signal line G1 and may drive the gate line G1 to the supply voltage Vdd in response to the Enable signal being a high logic level. Signal line G2 electrically connects the output of multiplexer MUX31 to the gate of transistor Q219.

A distinctive feature of the topology described in FIG. 3 is that the topology may be configured via driver D31 and multiplexer MUX31 to operate internal load 215 is the ballast mode or in constant-current mode. Supporting the ballast mode and constant-current mode with the same circuit may result in an area reduction in the implementation of internal load 215.

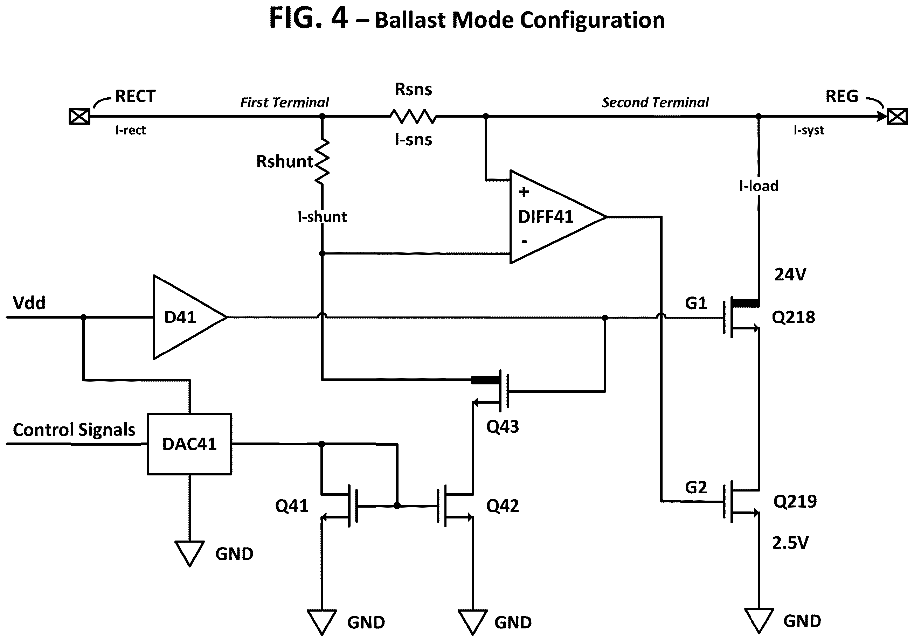

FIG. 4 is a schematic structural diagram of internal load 215 integrated with current shunt circuitry 214. In FIG. 4, current shunt circuitry 214 may include a digital-to-analog converter DAC41, a differential amplifier DIFF41, a driver D31 and a shunt resistor (Rshunt). In response to a selection of the '1' input in multiplexer MUX31 of FIG. 3, the schematic structural diagram of FIG. 3 may be functionally equivalent to the current regulator 212 of FIG. 4.

Internal load 215 in FIG. 4 may include transistor Q218 and transistor Q219. Details for internal load 215 in FIG. 4 are explained with reference to FIG. 2D. Signal line G1, in FIG. 4, electrically connects the output of driver D41 to the gate of the first cascode transistor Q218. Driver D41 applies an intermediate the supply voltage Vdd to the gate of transistor Q218.

A first terminal of resistor Rshunt is electrically connected to the first terminal of resistor Rsns. The second terminal of Rshunt is electrically connected to the drain of cascode transistor Q43. Converter DAC41 is electrically connected to the input of current mirror Q41/Q42 via the drain of transistor Q41 and parallel gate connection to transistor Q41 and transistor Q42. Converter DAC41 is digital-to-analog converter. The output of current mirror Q41/Q42, which is the drain of transistor Q42, is electrically connected to the source of cascode transistor Q43. Cascode transistor Q43 may be an LDNMOS transistor. Alternatively, any of the transistors Q218 and Q43 may be a transistor other than an LDNMOS transistor. The shunt current (I-shunt) may flow in the flow path between the first terminal of resistor Rsns and the current mirror Q41/Q42.

Transistors Q41, Q42 and Q43 may each be implemented as N-type metal-oxide-semiconductor (NMOS) transistors. Any of the transistors Q41, Q42, Q43 may be implemented as a Field Effect Transistor (FET), a bipolar transistor, a P-type metal-oxide-semiconductor (PMOS) transistor, or any other transistor device. Those skilled in the art will appreciate that transistors Q218 and Q43 may be omitted.

Current regulator 212 may measure current flowing along a pathway in power transceiver 121. For example, the differential amplifier DIFF41 may implement current sensing in the example of FIG. 4. The positive input to the differential amplifier DIFF41 is electrically connected to the second terminal of resistor Rsns. The negative input to the differential amplifier DIFF41 is electrically connected to the resistor Rshunt. Signal line G2 electrically connects the output terminal of the differential amplifier DIFF41 to the gate of transistor Q219.

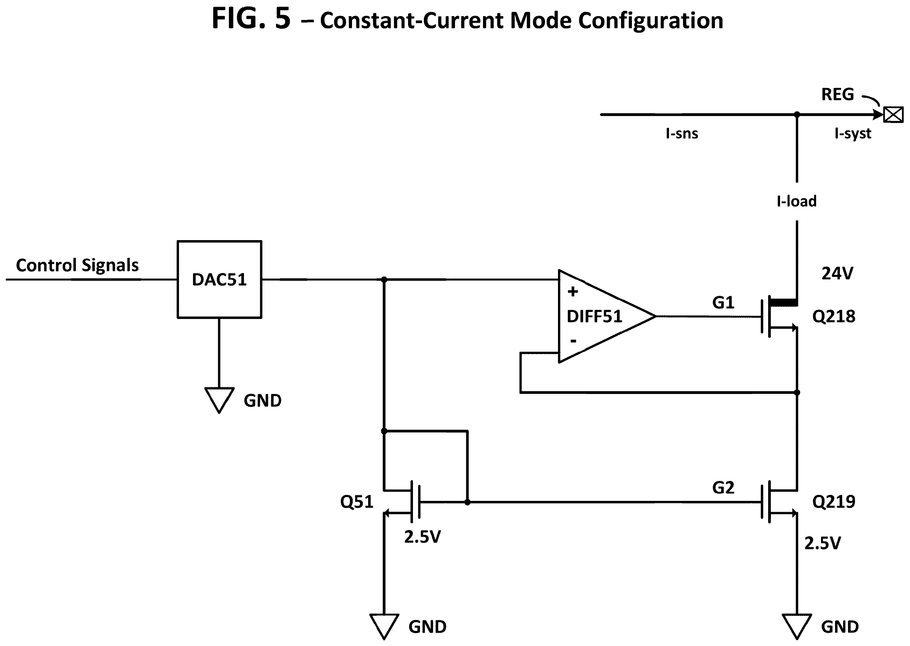

FIGS. 5 is an example schematic structural diagram of current regulator 212.

Converter DAC51 and differential amplifier DIFF51 are present in current regulator 212 of FIG. 5. Converter DAC51 is a digital-to-analog converter. Also in the example of FIG. 5, current regulator 212 may include a current mirror transistor Q51. Transistors Q51, Q218, and Q219 may be implemented as N-type metal-oxide-semiconductor (NMOS) transistors. Alternatively, transistors Q51, Q218, and Q219 may be implemented as a Field Effect Transistor (FET), a bipolar transistor, a P-type metal-oxide-semiconductor (PMOS) transistor, or any other transistor device.

The source of the current mirror transistor Q51 is electrically connected to ground. The gate of the current mirror transistor Q51 is electrically connected to the drain of the current mirror transistor Q51 and the gate of transistor Q219. The drain and gate of the current mirror transistor Q51 is electrically connected to an output from the converter DAC51.

The differential amplifier DIFF51 may be used to improve accuracy of current generation in FIG. 5. The positive input to the differential amplifier DIFF51 is electrically connected to the drain and gate of the current mirror transistor Q51 and to the gate of transistor Q219. The negative input to the differential amplifier DIFF51 is electrically connected to the source of transistor Q218 and the drain of transistor Q219. The output from the differential amplifier DIFF51 is electrically connected to the gate of cascode transistor Q218.

Internal load 215 may exist in FIG. 5 in the form of transistor Q218 and transistor Q219. Details for internal load 215 in FIG. 5 are explained with reference to FIG. 2D. Signal line G1 electrically connects the output of DIFF51 to the gate of transistor Q218. Signal line G2 electrically connects the gate of the current mirror transistor Q51 and to the gate of transistor Q219. The positive input to the differential amplifier DIFF51 is also electrically connected to signal line G2. In response to multiplexer MUX31 selecting the '0' input in the example of FIG. 3, current regulator 212 may become functionally equivalent to the current regulator in FIG. 5 along with buffer D31 being reconfigured as differential amplifier DIFF51.

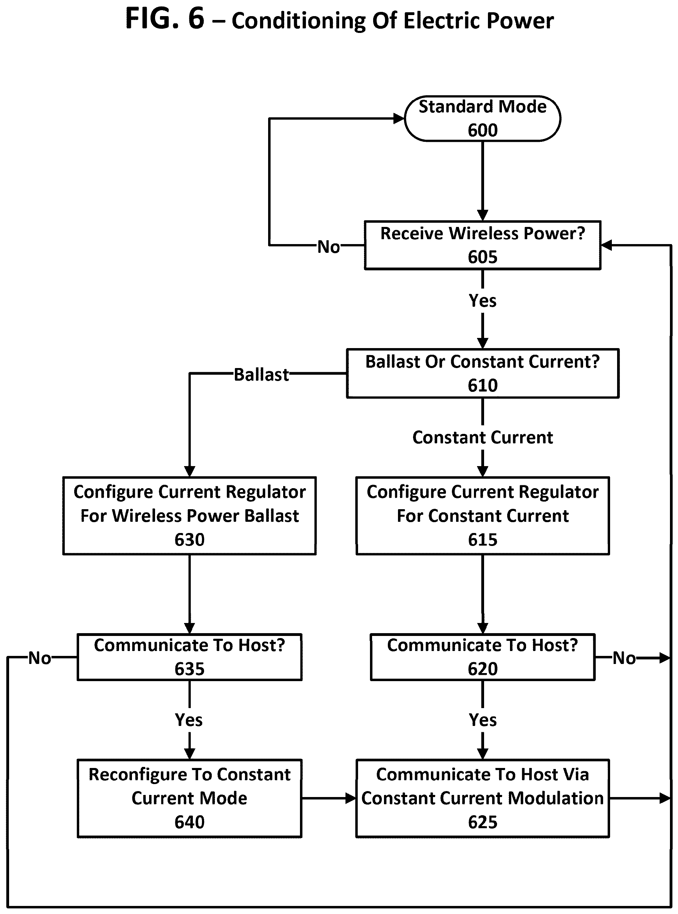

FIG. 6 is a flowchart that illustrates an example conditioning of electric power by power transceiver 211. By way of illustration, memory 127 may store machine-readable instructions that, in response to executed by processor 126, causes controller 125 to perform a sequence of activities illustrated in the example power conditioning process of FIG. 6. Controller 125 may execute the power conditioning process as will be explained in detail.

In block 600, power transceiver 121 may be in a standard mode. The standard mode is an operating state of device 120 where power transceiver 121 is powered on but is neither receiving power wirelessly from external transceiver 110 nor wirelessly transmitting information to external transceiver 110. In the absence of controller 125 detecting receipt of the electric power by power converter 211, controller 125 may return processing from block 605 to block 600.

Alternatively, controller 125 may advance processing from block 605 to block 610 in response to controller 125 detecting receipt of the electric power by power converter 211. In block 615, controller 125 may extract a mode selection from memory 127. In response to extracting the mode selection from memory 127, controller 125 may process the mode selection to determine whether the mode selection indicates a ballast mode or a constant-current mode. Controller 125 may advance processing from block 610 to block 630 in response to determining that the mode selection indicates the ballast mode. Alternatively, in response to determining that the mode selection indicates a constant-current mode, controller 125 may advance processing from block 610 to block 615.

In block 615, controller 125 may configure power transceiver 121 to wirelessly receive electric power from external transceiver 110 in constant-current mode. FIG. 2C illustrates an example constant-current mode. Controller 125 may configure for power transceiver 121 to wirelessly receive the electric power from external transceiver 110 in constant-current mode in response to the mode selection being constant-current mode selection. In response to configuring power transceiver 121 to wirelessly receive electric power in constant-current mode, controller 125 may calibrate current regulator 212 to operate current regulator 212 in a constant-current mode configuration. For example, signals appearing on signal lines G1 and G2 in FIGS. 2D, 3 and 5 may cause internal load 215 to flow load current (I-load) in the flow path between the second terminal of resistor Rsns and internal load 215.

In response to operating current regulator 212 in constant-current mode configuration, controller 125 may cause current shunt circuity 214 to output the signals appearing on signal lines G1 and G2 in a manner that gives rise to internal load 215 functioning in constant-current mode. During constant-current mode, sensed current (I-sns) is linear entirely with system current (I-syst). Voltage regulator 213 may convert system current (I-syst) into voltage Vreg and output voltage Vreg to charger 122. Controller 125 may advance processing from block 615 to block 620.

In block 620, controller 125 may determine whether or not device 120 is to communicate with external transceiver 110. Controller 125 may advance processing from block 620 to block 605 in response to an absence of communication occurring between device 120 and external transceiver 110. Controller 125 may determine, from operating conditions of device 120, that communication is to occur between device 120 and external transceiver 110. In response to controller 125 determining that communication is to occur between device 120 and external transceiver 110, controller 125 may advance processing from block 620 to block 625.

In block 625, controller 125 may configure power converter 211 to communicate with external transceiver 110 in constant-current mode. In response to allowing power transceiver 121 to wirelessly communicate in constant-current mode, controller 125 may configure current regulator 212 to operate current regulator 212 in a constant-current mode configuration. For example, signals appearing on signal lines G1 and G2 may cause internal load 215 to flow load current (I-load) in the flow path between the second terminal of resistor Rsns and internal load 215. FIG. 2C illustrates an example constant-current mode. In response to operating current regulator 212 in constant-current mode configuration, controller 125 may cause current shunt circuity 213 to output the signals appearing on signal lines G1 and G2 in a manner that gives rise to internal load 215 functioning in constant-current mode. Communications in block 625 is achieved in response to power converter 211 modulating current based on the data being transmitted. For example, a logic 1 may be transmitted as 200mA and logic 0 be transmitted as 50mA. External transceiver 110 may measure the power transmitted to decode the data sent by power converter 211 and extract the data sent by power converter 211. Controller 125 may return the processing in FIG. 6 from block 625 to block 605 in response to controller 125 causing a completion of communication to external transceiver 110.

Controller 125 may advance processing from block 610 to block 630 in response to the mode selection indicates a ballast mode. In block 630, controller 125 may configure power transceiver 121 to wirelessly receive electric power from external transceiver 110 in the ballast mode. In response to the mode selection being a constant-current mode selection, controller 125 may allow for power transceiver 121 to wirelessly receive the electric power from external transceiver 110 in constant-current mode. Controller 125 may calibrate current regulator 212 to operate current regulator 212 in a constant-current mode configuration in response to allowing power transceiver 121 to wirelessly receive electric power in constant-current mode. Constant-current mode configuration is another power reception mode. For example, signals appearing on signal lines G1 and G2 may cause internal load 215 to flow load current (I-load) in the flow path between the second terminal of resistor Rsns and internal load 215. FIG. 2C illustrates an example constant-current mode. In response to operating current regulator 212 in constant-current mode configuration, controller 125 may cause current shunt circuity 214 to output the signals appearing on signal lines G1 and G2 in a manner that gives rise to internal load 215 functioning in constant-current mode. During constant-current mode, sensed current (I-sns) is linear entirely with system current (I-syst). Voltage regulator 213 may convert system current (I-syst) into voltage Vreg and output voltage Vreg to charger 122. Controller 125 may advance processing from block 630 to block 635.

In block 635, controller 125 may determine whether or not device 120 is to communicate with external transceiver 110. Controller 125 may determine, from operating conditions of device 120, communication is to occur between device 120 and external transceiver 110. In response to controller 125 determining an absence of communication between device 120 and external transceiver 110, controller 125 may advance processing from block 635 to block 605. Alternatively, controller 125 may advance processing from block 635 to block 640 in response to controller 125 determining that communication is to occur between device 120 and external transceiver 110.

In block 640, controller 125 may reconfigure power transceiver 121 from the ballast mode to constant-current mode. Controller 125 may cause current regulator 212 to operate in a constant-current mode configuration as a result of reconfiguring power transceiver 121 from the ballast mode to constant-current mode. Controller 125 may advance processing from block 640 to block 625 in response to controller 125 reconfiguring power transceiver 121 from ballast mode to constant-current mode.

Those skilled in the art will also appreciate the arrangement or interconnection of components such as "coupled," "connected," "on," "under," or similar wording allows for indirect connections, or intervening components or layers.

Certain operations of methods according to the technology, or of systems executing those methods, may be represented schematically in the figures or otherwise discussed herein. Unless otherwise specified or limited, representation in the figures of particular operations in particular spatial order may not necessarily require those operations to be executed in a particular sequence corresponding to the particular spatial order. Correspondingly, certain operations represented in the figures, or otherwise disclosed herein, may be executed in different orders than are expressly illustrated or described, as appropriate for particular examples of the technology. Further, in some examples, certain operations may be executed in parallel or partially in parallel, including by dedicated parallel processing devices, or separate computing devices configured to interoperate as part of a large system.

As used herein, unless otherwise limited or defined, "or" indicates a non-exclusive list of components or operations that may be present in any variety of combinations, rather than an exclusive list of components that may be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as, e.g., "either," "only one of," or "exactly one of." Further, a list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more of each of A, B, and C. Similarly, a list preceded by "a plurality of" (and variations thereon) and including "or" to separate listed elements indicates options of multiple instances of any or all of the listed elements. For example, the phrases "a plurality of A, B, or C" and "two or more of A, B, or C" indicate options of: A and B; Band C; A and C; and A, B, and C. In general, the term "or" as used herein only indicates exclusive alternatives (e.g., "one or the other but not both") when preceded by terms of exclusivity, such as, e.g., "either," "only one of," or "exactly one of."

Any mark, if referenced herein, may be common law or registered trademarks of third parties affiliated or unaffiliated with the applicant or the assignee. Use of these marks is by way of example and shall not be construed as descriptive or to limit the scope of disclosed or claimed embodiments to material associated only with such marks.

The terminology used herein is for describing various examples only, and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Throughout the application, ordinal numbers (e.g., first, second, third, etc.) may be used as an adjective for an element (i.e., any noun in the application). Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section.

The use of ordinal numbers is not to imply or create any particular ordering of the elements nor to limit any element to being only a single element unless expressly disclosed, such as by the use of the terms "before," "after," "single," and other such terminology. Rather, the use of ordinal numbers is to distinguish between the elements. By way of an example, a first element is distinct from a second element, and the first element may encompass more than one element and succeed (or precede) the second element in an ordering of elements. Thus, a first member, component, region, layer, or section referred to in examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and after an understanding of the disclosure of this application. Terms, such as those defined in commonly used dictionaries, are to be interpreted as having a meaning that is consistent with their meaning in the context of the relevant art and the disclosure of this application.

Although the present technology has been described by referring to certain examples, workers skilled in the art will recognize that changes may be made in form and detail without departing from the scope of the discussion.

## Claims

1. A power transceiver comprising:
a power converter configured to convert, in response to wirelessly receiving electric power, the electric power into an unregulated current;
a current regulator configured to adjust, in response to flowing a predetermined amount of the unregulated current to ground, a system current by the predetermined amount; and
a voltage regulator configured to maintain, in response to converting the system current into a regulated voltage, the regulated voltage at a voltage level.

2. The power transceiver according to claim 1, wherein the power converter is configured to wirelessly receive the electric power.

3. The power transceiver according to claim 1 or 2, wherein the current regulator configured to increase, in response to adjusting the system current, the system current by the predetermined amount, and/or
wherein the current regulator configured to decrease, in response to adjusting the system current, the system current by the predetermined amount.

4. The power transceiver according to one of the preceding claims, wherein the power converter is configured to output the unregulated current through a resistor.

5. The power transceiver according to claim 4, wherein the unregulated current comprises a sense current and a shunt current.

6. The power transceiver according to claim 5, wherein the current regulator is configured to flow, in response to measuring the sense current flowing through the resistor, the predetermined amount of the unregulated current to the ground, and/or
wherein the current regulator is configured to flow, in response to measuring the shunt current, the predetermined amount of the unregulated current to the ground.

7. A device comprising:
a power converter configured to convert, in response to wirelessly receiving electric power, the electric power into an unregulated current;
a current regulator configured to flow, in response to operating in a power reception mode, a predetermined amount of the unregulated current to ground; and
a controller configured to calibrate, in response to processing a mode selection, the current regulator to operate in the power reception mode.

8. The device according to claim 7, wherein the controller is configured to extract the mode selection from memory.

9. The device according to claim 7 or 8, wherein the unregulated current comprises a system current.

10. The device according to claim9, further comprising:
a voltage regulator configured to maintain, in response to converting the system current into a regulated voltage, the regulated voltage at a voltage level, and/or
a charger configured to transform, in response to receiving the regulated voltage from the voltage regulator, the regulated voltage into an adjusted DC voltage.

11. The device according to claim 9 or 10, wherein the current regulator is configured to adjust, in response to flowing the predetermined amount of the unregulated current to the ground, the system current by the predetermined amount, and/or
wherein the current regulator is configured to increase the system current by the predetermined amount.

12. The device according to one of the claims 9 to 11, wherein the unregulated current comprises a sense current.

13. The device according to claim 12, wherein the current regulator is configured to flow, in response to measuring the sense current flowing through a resistor, the predetermined amount of the unregulated current to the ground.

14. The device according to claim 12 or 13, wherein the current regulator is configured to inhibit, in response to the sense current being below a ballast limit, the system current from falling below the ballast limit, and
in particular, wherein the unregulated current comprises the sense current.

15. The device according to claim 14, wherein the current regulator is configured to cause, in response to the sense current being equal to or above the ballast limit, linearity of the system current with the sense current.
